# EUROPEAN PATENT APPLICATION

(11) **EP 4 601 239 A1**
(43) Date of publication of application: **13.08.2025**
(21) Application number: 25155545.4
(22) Date of filing: 03.02.2025
(51) Int. Cl.: H04L 7/04, H04L 25/49, H02P 5/46

(54) **CONTROL DEVICE**

(30) Priority: 06.02.2024 JP 2024016188
(71) Applicant: Aisin Corporation, Aichi 448-8650 (JP)
(72) Inventor: SHIMONO, Takafumi, Kariya, 448-8650 (JP); FUKUDA, Yusuke, Kariya, 448-8650 (JP); ONOSAKA, Naoki, Kariya, 448-8650 (JP); HIRATSUKA, Yuta, Kariya, 448-8650 (JP); USHITA, Yoshiaki, Kariya, 448-8650 (JP)
(74) Representative: Winter, Brandl - Partnerschaft mbB

(57) **Abstract**

A control device (1) performs communication with a command device based on a synchronization signal generated by the command device and controls driving of a control target. The control device includes: a specified value information storage unit (11) configured to store, as specified value information, a specified value specifying an oscillation frequency of the synchronization signal generated by the command device; a clock signal generation unit (12) configured to generate a clock signal having a predetermined oscillation frequency; a measured value information acquisition unit (13) configured to acquire, as measured value information, a measured value obtained by measuring the oscillation frequency of the synchronization signal transmitted from the command device based on the clock signal; a correction value calculation unit (14) configured to calculate, based on the specified value information and the measured value information, a correction value for correcting command value information transmitted from the command device; a command value information acquisition unit (15) configured to acquire the command value information indicating a command value for the control target from the command device; a corrected command value calculation unit (16) configured to calculate a corrected command value obtained by correcting a cycle of the command value information based on the correction value; and a control unit (17) configured to control the driving of the control target based on the corrected command value.

## Description

### TECHNICAL FIELD

This disclosure relates to a control device that performs communication with a command device based on a synchronization signal generated by the command device and controls driving of a control target.

### BACKGROUND DISCUSSION

In the related art, for example, a control device that communicates with a higher-level system to acquire a control command and controls driving of a control target based on the acquired control command is used. As one of such communication with the higher-level system, for example, there is communication of a master-slave method. In the communication of the master-slave method, independent clock signals are used. When an oscillation frequency of the clock signal is different between a master-side transceiver and a slave-side transceiver, the above-described control command may not be appropriately transmitted. Therefore, a crystal oscillator or a ceramic oscillator is mounted on each of the master-side transceiver and the slave-side transceiver to reduce a difference in the oscillation frequency of the clock signals between the transceivers. Such a crystal oscillator and a ceramic oscillator have high accuracy of the oscillation frequency and low temperature dependence, and thus can implement high communication quality. However, since the crystal oscillator and the ceramic oscillator are more expensive than, for example, an LC oscillation circuit configured using a coil and a capacitor, and an RC oscillation circuit configured using a resistor and a capacitor, there is a problem that a cost of the entire system increases.

In a data communication system disclosed in JP 2005-303632A (Reference 1), the crystal oscillator is mounted only on a master device, and a voltage-controlled oscillator (VCO) including an RC oscillation circuit or an LC oscillation circuit using a variable capacitance diode is mounted on a slave device. In the slave device, an oscillation frequency of a clock signal generated by the voltage-controlled oscillator is adjusted based on a signal received from the master device. Accordingly, the slave device is configured at low cost.

In the data communication system disclosed in Reference 1, the oscillation frequency of the clock signal generated by the voltage-controlled oscillator of the slave device is adjusted based on the signal received from the master device, and thus the voltage-controlled oscillator needs to be configured so that the oscillation frequency can be adjusted from the outside, and the addition of an adjustment circuit for adjusting the oscillation frequency causes an increase in cost. In addition, the inexpensive LC oscillation circuit or RC oscillation circuit is generally incorporated in an integrated circuit in many cases, but an existing integrated circuit is not configured to be adjustable from the outside, and it is necessary to newly design or separately mount a crystal oscillator or the like. In addition, the slave device may be able to secure communication quality without using a high-accuracy clock signal generation circuit by a function supported by a communication standard such as local interconnect network (LIN) communication. In the case of such a system, it is meaningful to improve the oscillation frequency accuracy of the clock signal in the slave device in order to improve the control accuracy of the control target. Therefore, the data communication system disclosed in Reference 1 has room for improvement in terms of improving the control accuracy of the control target at low cost.

A need thus exists for a control device capable of improving control accuracy of a control target at low cost is required.

### SUMMARY

A control device according to this disclosure having a characteristic configuration is a control device that performs communication with a command device based on a synchronization signal generated by the command device and controls driving of a control target, and the control device includes: a specified value information storage unit configured to store, as specified value information, a specified value specifying an oscillation frequency of the synchronization signal generated by the command device; a clock signal generation unit configured to generate a clock signal having a predetermined oscillation frequency; a measured value information acquisition unit configured to acquire, as measured value information, a measured value obtained by measuring the oscillation frequency of the synchronization signal transmitted from the command device based on the clock signal; a correction value calculation unit configured to calculate, based on the specified value information and the measured value information, a correction value for correcting command value information transmitted from the command device; a command value information acquisition unit configured to acquire the command value information indicating a command value for the control target from the command device; a corrected command value calculation unit configured to calculate a corrected command value obtained by correcting a cycle of the command value information based on the correction value; and a control unit configured to control the driving of the control target based on the corrected command value.

According to such a characteristic configuration, the correction value for correcting the command value information is calculated based on the specified value specifying the oscillation frequency of the synchronization signal generated in the master device based on the specified value information stored in the specified value information storage unit and the measured value of the oscillation frequency of the synchronization signal of the master device measured by a control device side that is acquired by the measured value information acquisition unit, and the command value for the control target transmitted from the master device is corrected using the calculated correction value. Accordingly, since the control device does not require the high-accuracy oscillation frequency, and the control of the driving of the control target is performed based on the calculated corrected command value obtained by correcting the command value, the control target can be controlled with high accuracy according to the command value. Further, such correction of the command value can be appropriately performed at a desired timing, and for example, even when an environmental temperature of the control device changes, the driving of the control target can be controlled with high accuracy in real time.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a block diagram showing configurations of a control device and a master device;
FIG. 2 is a diagram illustrating calculation of correction values; and
FIG. 3 is a diagram illustrating calculation of corrected command values.

### DETAILED DESCRIPTION

A control device disclosed here is configured to be capable of improving control accuracy of a control target at low cost. Hereinafter, a control device 1 according to the present embodiment will be described. However, the control device 1 is not limited to the following embodiments, and various modifications can be made without departing from the gist of this disclosure.

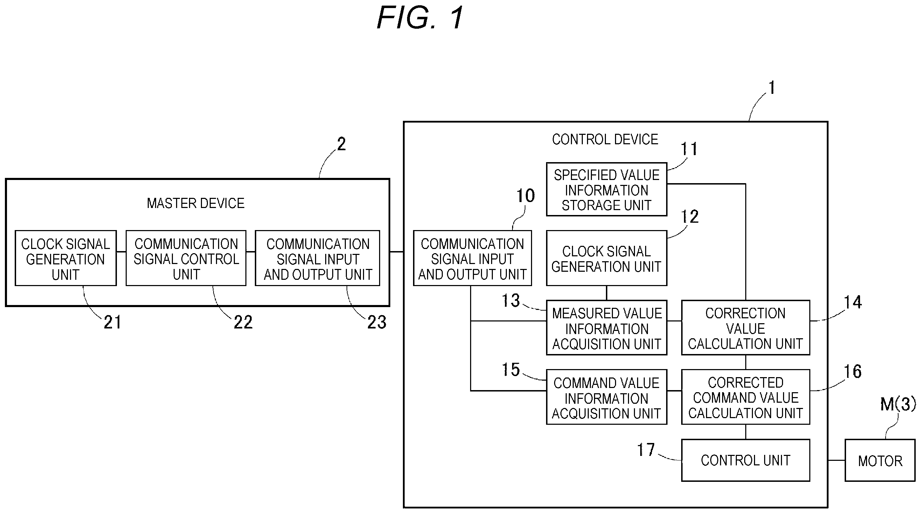

FIG. 1 is a block diagram schematically showing configurations of the control device 1 and a master device 2 (an example of a "command device"). The control device 1 communicates with the master device 2 based on a synchronization signal generated in the master device 2, and controls driving of a control target 3. In the present embodiment, an example will be described in which the control device 1 communicates with the master device 2 by local interconnect network (LIN) communication in which the master device 2 controls transmission and reception, and the control target 3 is a motor M.

As shown in FIG. 1, the master device 2 includes a clock signal generation unit 21, a communication signal control unit 22, and a communication signal input and output unit 23. The control device 1 includes a communication signal input and output unit 10, a specified value information storage unit 11, a clock signal generation unit 12, a measured value information acquisition unit 13, a correction value calculation unit 14, a command value information acquisition unit 15, a corrected command value calculation unit 16, and a control unit 17. In order to perform processing related to the communication and the control of the driving of the control target 3, each functional unit is constructed by hardware, software, or both with a CPU as a core member.

The clock signal generation unit 21 generates a clock signal based on, for example, resonation of a crystal resonator. Specifically, the resonation of the crystal resonator is divided to generate the clock signal that resonates at a desired oscillation frequency. Therefore, since the resonation of the crystal resonator has a small error or temperature fluctuation, a clock signal that oscillates at a high-accuracy (for example, ± 0.5%) oscillation frequency can be obtained from the clock signal generation unit 21. The clock signal is used as the synchronization signal for the communication with the control device 1. Here, it is assumed that the oscillation frequency of the synchronization signal is f1 [Hz], Hereinafter, in order to facilitate understanding, the clock signal generated by the clock signal generation unit 21 may be referred to as a first clock signal.

The communication signal control unit 22 generates a communication signal and communicates with the control device 1 based on the synchronization signal. This communication is performed via the communication signal input and output unit 23.

The specified value information storage unit 11 stores a specified value specifying the oscillation frequency of the synchronization signal generated in the master device 2 as specified value information. The oscillation frequency of the synchronization signal generated in the master device 2 corresponds to the high-accuracy oscillation frequency of the clock signal generated by the clock signal generation unit 21, that is, the oscillation frequency of the first clock signal. In the present embodiment, the clock signal generation unit 21 generates the first clock signal having the oscillation frequency f1 [Hz]. Therefore, the specified value specifying the oscillation frequency of the synchronization signal corresponds to the oscillation frequency f1 [Hz]. As a result, the specified value information storage unit 11 stores the oscillation frequency f1 [Hz] of the clock signal (first clock signal) as the specified value information.

The clock signal generation unit 12 generates a clock signal having a predetermined oscillation frequency. This clock signal is a clock signal used in the control device 1, and the control device 1 performs control based on this clock signal. Here, the clock signal generation unit 12 is configured using, for example, an RC oscillation circuit. Therefore, the clock signal generation unit 12 generates a clock signal having accuracy lower than that of the clock signal generated by the clock signal generation unit 21 configured using the crystal resonator. The clock signal generated by the clock signal generation unit 12 has an oscillation frequency f2 [Hz], and the oscillation frequency f2 [Hz] is ten times the oscillation frequency f1 [Hz]. Hereinafter, in order to facilitate understanding, the clock signal generated by the clock signal generation unit 12 may be referred to as a second clock signal.

The measured value information acquisition unit 13 acquires, as measured value information, a measured value obtained by measuring the oscillation frequency of the synchronization signal transmitted from the master device 2 based on the clock signal generated by the clock signal generation unit 12. As described above, the oscillation frequency of the second clock signal generated by the clock signal generation unit 12 is set to f2 [Hz]. In addition, as described above, the accuracy of the oscillation frequency of the second clock signal is lower than the accuracy of the oscillation frequency of the first clock signal. However, the measured value information acquisition unit 13 recognizes that the oscillation frequency of the second clock signal generated by the clock signal generation unit 12 is f2 [Hz] regardless of whether the oscillation frequency of the second clock signal is a desired value. The measured value information acquisition unit 13 counts the number of pulses of the second clock signal included in one cycle of the synchronization signal transmitted from the master device 2, for example, and calculates the cycle of the synchronization signal based on a counting result. Then, the oscillation frequency of the first clock signal is measured based on the calculated cycle.

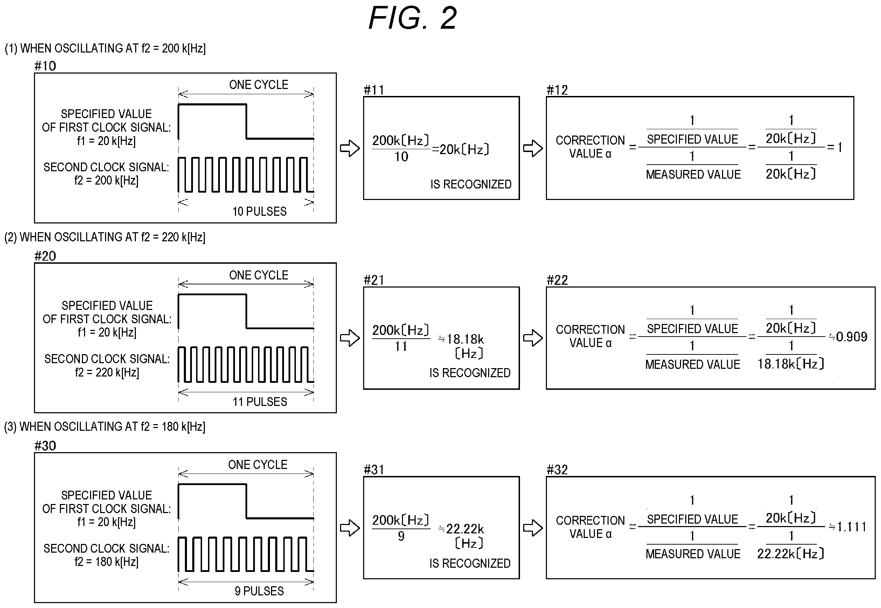

For example, as shown in (1) in FIG. 2, it is assumed that the oscillation frequency f1 of the first clock signal is 20 k[Hz] and a set value of the oscillation frequency f2 of the second clock signal is set to 200 k[Hz]. At this time, if the actual oscillation frequency f2 of the second clock signal is 200 k[Hz], one cycle of the synchronization signal transmitted from the master device 2 includes 10 pulses of the second clock signal (#10). In this case, the measured value information acquisition unit 13 recognizes that the oscillation frequency of the synchronization signal is 20 k[Hz] (#11).

However, since the accuracy of the oscillation frequency of the second clock signal is low as described above, there is a possibility that the oscillation frequency deviates from a desired value (here, 200 k[Hz]). At this time, the measured value information acquisition unit 13 is unable to determine whether the oscillation frequency f2 of the second clock signal is deviated from the desired value (200 k[Hz]), and the measured value information acquisition unit 13 counts the number of pulses of the second clock signal included in one cycle of the synchronization signal transmitted from the master device 2 assuming that the second clock signal oscillates at the oscillation frequency of the desired value, and measures the oscillation frequency of the synchronization signal transmitted from the master device 2 based on the counting result.

For example, as shown (2) in FIG. 2, if the actual oscillation frequency f2 of the second clock signal is 220 k[Hz], one cycle of the synchronization signal transmitted from the master device 2 includes 11 pulses of the second clock signal (#20). In this case, the measured value information acquisition unit 13 recognizes that the oscillation frequency of the synchronization signal is 18.18 k[Hz] (#21). In addition, if the actual oscillation frequency f2 of the second clock signal is 180 k[Hz], as shown (3) in FIG. 2, one cycle of the synchronization signal transmitted from the master device 2 includes 9 pulses of the second clock signal (#30). In this case, the measured value information acquisition unit 13 recognizes that the oscillation frequency of the synchronization signal is 22.22 k[Hz] (#31).

Returning to FIG. 1, the correction value calculation unit 14 calculates a correction value α for correcting command value information transmitted from the master device 2 based on the specified value information and the measured value information. The specified value information is stored in the specified value information storage unit 11, and is stored as f1 [Hz] in the present embodiment. The measured value information is acquired by the measured value information acquisition unit 13 based on the second clock signal generated by the clock signal generation unit 12.

The correction value α is a value obtained by dividing the specified value by the measured value. The specified value is indicated by the specified value information stored in the specified value information storage unit 11. The measured value is acquired by the measured value information acquisition unit 13. For example, as shown in (1) in FIG. 2, when the measured value obtained by the measured value information acquisition unit 13 is 20 k[Hz] (#11), the correction value α is 1 which is a value obtained by dividing the cycle of the specified value by the cycle of the measured value (#12).

On the other hand, as shown in (2) in FIG. 2, when the measured value obtained by the measured value information acquisition unit 13 is 18.18 k[Hz] (#21), the correction value α is 0.909 which is the value obtained by dividing the cycle of the specified value by the cycle of the measured value (#22). In addition, as shown in (3) in FIG. 2, when the measured value obtained by the measured value information acquisition unit 13 is 22.22 k[Hz] (#31), the correction value α is 1.111 which is the value obtained by dividing the cycle of the specified value by the cycle of the measured value (#32).

Returning to FIG. 1, the command value information acquisition unit 15 acquires the command value information indicating a command value for the motor M from the master device 2. The command value for the motor M corresponds to a command rotation speed for the motor M. Such a command rotation speed is transmitted by a signal (communication signal) from the master device 2 to the control device 1. Specifically, in a predetermined period allocated within one cycle of the communication signal, information including a preset number of bits (for example, "00110000" in a case of information including 8 bits) is transmitted. The command value information acquisition unit 15 acquires the command value information by counting based on the second clock signal generated by the clock signal generation unit 12. Specifically, the predetermined period is specified by the information including a preset number of bits, the predetermined period is counted based on the second clock signal generated by the clock signal generation unit 12, and information including bits within the counted period is treated as the command value information.

The corrected command value calculation unit 16 calculates a corrected command value by correcting the command value information based on the correction value α. The command value information is acquired by the command value information acquisition unit 15. The correction value α is calculated by the correction value calculation unit 14.

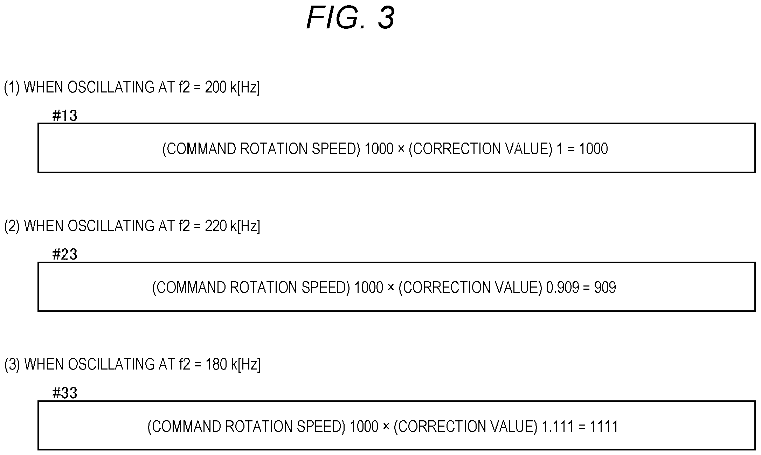

If the oscillation frequency f2 of the second clock signal in the control device 1 is not deviated from the set value (when oscillating at f2 = 200 k[Hz]), the correction value α is 1 (#12). At this time, for example, when the command value information is information indicating a command value for setting the command rotation speed of the motor M to 1000 rotations, as shown in (1) in FIG. 3, the corrected command value calculated by the corrected command value calculation unit 16 is 1000 rotations (#13).

On the other hand, when the oscillation frequency f2 of the second clock signal in the control device 1 is largely deviated from the set value (for example, when oscillating at f2 = 220 k[Hz]), the correction value α is 0.909 (#22). At this time, when the command value information is the information indicating a command value for setting the command rotation speed of the motor M to 1000 rotations, as shown in (2) in FIG. 3, the corrected command value calculated by the corrected command value calculation unit 16 is 909 rotations (#23). Accordingly, the command value can be reduced by an amount that the second clock signal in the control device 1 is earlier (the oscillation frequency is higher) than the set value.

In addition, when the oscillation frequency f2 of the second clock signal in the control device 1 is deviated to be lower than the set value (for example, when oscillating at f2 = 180 k[Hz]), the correction value α is 1.111 (#32). At this time, when the command value information is the information indicating a command value for setting the command rotation speed of the motor M to 1000 rotations, as shown in (3) in FIG. 3, the corrected command value calculated by the corrected command value calculation unit 16 is 1111 rotations (#33). Accordingly, the command value can be increased by an amount that the second clock signal in the control device 1 is later (the oscillation frequency is lower) than the set value.

Returning to FIG. 1, the control unit 17 controls the driving of the control target 3 based on a correction command value. That is, in the present embodiment, the control unit 17 receives the corrected command value from the corrected command value calculation unit 16, and controls the driving of the motor M such that the rotation speed of the motor M becomes the rotation speed indicated by the corrected command value.

As described above, according to the control device 1, even the control device 1 is provided with the clock signal generation unit 12 configured using an inexpensive oscillator without using an expensive oscillator having a high-accuracy oscillation frequency, it is possible to perform highquality control by utilizing communication information with the master device 2.

### Other Embodiments

Next, other embodiments of the control device 1 will be described.

In the above embodiment, the correction value α is the value obtained by dividing the specified value by the measured value. However, for example, the correction value α may be a value obtained by dividing the specified value by the measured value and multiplying the result by a predetermined coefficient. Such a coefficient is effective when, for example, due to a mechanical loss on a motor M side, the oscillation frequency of the signal from the master device 2 to the control device 1 inevitably deviates. Alternatively, a value that reduces an influence of external noise may be used as such a coefficient.

In the above embodiment, the control target 3 is the motor M. However, the control target 3 may be a device different from the motor M. In this case, the command value is a control command value of the device.

In the above embodiment, the communication performed between the master device 2 and the control device 1 is the local interconnect network (LIN) communication in which the master device 2 controls transmission and reception. However, the communication performed between the master device 2 and the control device 1 may be pulse width modulation (PWM) communication in which the command value is specified by a pulse width. In this case, a pulse cycle transmitted from the control device 1 is measured based on the second clock signal, and the driving of the control target 3 can be controlled by the corrected command value corrected by the correction value α. Further, the command value information acquisition unit 15 in this case measures a time of a high period and a time of a low period of the communication signal, and acquires the command value information specified by calculating the pulse width.

In the above embodiment, the example is described in which one control device 1 and one master device 2 are provided. However, a plurality of the control devices 1 may be provided, and in this case, a process according to the above-described embodiment may be performed in each of the plurality of control devices 1. Further, a plurality of master devices 2 may be provided, and in this case, the process according to the above-described embodiment may be performed in each of the plurality of master devices 2 for one control device 1.

### Overview of Above Embodiment

An overview of the control device 1 described above will be described below.

(1) The control device 1 performs communication with the master device 2 based on the synchronization signal generated by the master device 2 (command device) and controls the driving of the motor M (control target 3). The control device 1 includes: the specified value information storage unit 11 configured to store, as the specified value information, the specified value specifying the oscillation frequency of the synchronization signal generated in the master device 2; the clock signal generation unit 12 configured to generate the clock signal having the predetermined oscillation frequency; the measured value information acquisition unit 13 configured to acquire, as the measured value information, the measured value obtained by measuring the oscillation frequency of the synchronization signal transmitted from the master device 2 based on the clock signal; the correction value calculation unit 14 configured to calculate, based on the specified value information and the measured value information, the correction value α for correcting the command value information transmitted from the master device 2; the command value information acquisition unit 15 configured to acquire the command value information indicating the command value for the motor M from the master device 2; the corrected command value calculation unit 16 configured to calculate the corrected command value obtained by correcting the cycle of the command value information based on the correction value α; and the control unit 17 configured to control the driving of the motor M based on the corrected command value.

According to this configuration, the correction value α for correcting the command value information is calculated based on the specified value specifying the oscillation frequency of the synchronization signal generated in the master device 2 based on the specified value information stored in the specified value information storage unit 11 and the measured value of the oscillation frequency of the synchronization signal of the master device 2 measured by a control device 1 side that is acquired by the measured value information acquisition unit 13, and the command value for the control target 3 transmitted from the master device 2 is corrected using the calculated correction value α. Accordingly, since the control device 1 does not require the high-accuracy oscillation frequency, and the control of the driving of the control target 3 is performed based on the calculated corrected command value obtained by correcting the command value, the control target 3 can be controlled with high accuracy according to the command value. Further, such correction of the command value can be appropriately performed at a desired timing, and for example, even when an environmental temperature of the control device 1 changes, the driving of the control target 3 can be controlled with high accuracy in real time.

(2) In the control device 1 according to (1), it is preferable that the correction value α is the value obtained by dividing the specified value by the measured value.

According to this configuration, the correction value calculation unit 14 can easily calculate the correction value α.

(3) In the control device 1 according to (1) or (2), it is preferable that the control target 3 is the motor M, and the command value is the command rotation speed of the motor M.

According to this configuration, even when the command value transmitted from the master device 2 to the control device 1 is deviated from the desired value due to the deviation of the clock signal in the control device 1, the control device 1 can cause the motor M to rotate with the desired command value.

(4) In the control device 1 according to any one of (1) to (3), it is preferable that the communication is the LIN communication in which the command device controls transmission and reception as the master device 2, or the PWM communication.

In the LIN communication or the PWM communication, the master device 2 generates the clock signal that oscillates at the high-accuracy oscillation frequency. Therefore, according to the present configuration, by correcting the command value by an amount of deviation in the oscillation frequency of the clock signal used in the control device 1 based on the clock signal oscillating at the high-accuracy oscillation frequency, the command value output by the control device 1 to the control target 3 can be made to have the same accuracy as that of the master device 2 that oscillates at the high-accuracy oscillation frequency. Accordingly, when the command value is transmitted based on the clock signal, the driving of the control target 3 can be appropriately controlled.

### Industrial Applicability

The technique according to the present disclosure can be used in a control device that performs communication with a command device based on a synchronization signal generated by the command device and controls driving of a control target.

## Claims

1. A control device (1) that performs communication with a command device based on a synchronization signal generated by the command device and controls driving of a control target, the control device comprising:
a specified value information storage unit (11) configured to store, as specified value information, a specified value specifying an oscillation frequency of the synchronization signal generated by the command device;
a clock signal generation unit (12) configured to generate a clock signal having a predetermined oscillation frequency;
a measured value information acquisition unit (13) configured to acquire, as measured value information, a measured value obtained by measuring the oscillation frequency of the synchronization signal transmitted from the command device based on the clock signal;
a correction value calculation unit (14) configured to calculate, based on the specified value information and the measured value information, a correction value for correcting command value information transmitted from the command device;
a command value information acquisition unit (15) configured to acquire the command value information indicating a command value for the control target from the command device;
a corrected command value calculation unit (16) configured to calculate a corrected command value obtained by correcting a cycle of the command value information based on the correction value; and
a control unit (17) configured to control the driving of the control target based on the corrected command value.

2. The control device according to claim 1, wherein
the correction value is a value obtained by dividing the specified value by the measured value.

3. The control device according to claim 1 or 2, wherein
the control target is a motor, and
the command value is a command rotation speed of the motor.

4. The control device according to claim 1 or 2, wherein
the communication is LIN communication in which the command device controls transmission and reception as a master device, or PWM communication.
